# NEW EUROPEAN PATENT SPECIFICATION

(11) **EP 1 185 594 B2**
(45) Date of publication and mention of the opposition decision: **25.02.2009**
(45) Mention of the grant of the patent: 30.03.2005
(21) Application number: 00931451.9
(22) Date of filing: 26.05.2000
(51) Int. Cl.: C09J 5/08, C08J 9/32, B60J 10/02, B60J 10/00

(54) **ADHESIVE COMPOSITION COMPRISING THERMOEXPANDABLE MICROCAPSULES**
THERMOEXPANDIERBARE MIKROHOHLKUGELN ENTHALTENDE KLEBSTOFFZUSAMMENSETZUNG
COMPOSITION ADHESIVE COMPRENANT DES MICROCAPSULES THERMOEXTENSIBLES

(30) Priority: 02.06.1999 GB 9912694
(43) Date of publication of application: 13.03.2002
(73) Proprietor: De-Bonding Limited, Jersey Channel Islands JE4 8SU (GB)
(72) Inventor: Bain, P. S., Wakefield, WF3 1JQ (GB); Manfrè, Giovanni, 37042 Caldiero (IT)
(74) Representative: Harrison Goddard Foote
(86) International application number: PCT/GB2000/002059
(87) International publication number: WO 2000/075254

(56) References cited:
- EP- - 0 527 505
- EP-A- 0 521 825
- EP-A- 0 717 091
- EP-A- 0 959 118
- WO-A-95/24441
- GB-A- 1 044 680
- JP-A- 5 661 468
- US-A- 5 064 494
- DATABASE WPI Section Ch, Week 199248 Derwent Publications Ltd., London, GB; Class A18, AN 1992-394008 XP002145458 & JP 04 292684 A (NIPPON RUBBER CO), 16 October 1992 (1992-10-16)
- DATABASE WPI Section Ch, Week 199215 Derwent Publications Ltd., London, GB; Class A14, AN 1992-120233 XP002145459 & JP 04 063885 A (ALFA GIKEN KK), 28 February 1992 (1992-02-28)
- Reports of the Shizuoka Industrial Research Institute of Shizuoka Prefecture No. 43, September 1998, Hiroaki Sakurai et al. "Evaluation of Adhesion Properties of Elastomeric Adhesive".

## Description

The present invention relates to an adhesive for use in sealing together two surfaces, for use especially in the glazing industry in general and in securing vehicle windscreens and/or windows and/or other vehicle features that may require replacement such as car panels; the invention also provides a method of use for installing and/or replacing vehicle windscreens and/or other fixed glazing on vehicles or buildings.

### Background of the Invention

Typically to install a window pane in a wooden/plastic/metal frame, the glass pane is firstly held in position against nails or other clasps and and then fixed into position by putty or plasters material. Conventional putty is a cement made from whiting and linseed oil which hardens over time to provide a peripheral rim of the window pane, thus separating interior and exterior environments and preventing air, moisture and/or heat transfer. The installation is completed once the putty has dried and this usually takes up to 6 hours or so depending on the kind of plasters used.

To remove a window pane after it has been fixed in position in a frame requires the window itself to be shattered so that the hardened putty or plasters can be scraped/chiselled away from the frame. The removal operation can cause damage to the frame and varnishes.

In use, the window pane is held rigidly around its edges so that even relatively small vibrational mechanical movements such as with earthquakes or bomb blasts or strong winds can cause the window pane to shatter.

In the automotive industry, cars direct from the factory production line typically have the windscreens and other fixed windows, including light assemblies fixed into position by placing the glass against a frame rim and using adhesives so as to direct glaze the glass. The life span of a windscreen and other fixed windows are significantly shorter than that of the vehicle itself partially due to degradation or damage or being deliberately broken by vandals/car thieves. Thus a motorist may need to replace the windscreen several times during the vehicle's lifetime.

Additionally, glued glazings have to be replaced any time the window, especially the windscreen, has been damaged in its optical performance by, for example, impact stones or other fractures or abrasion by wipers. Damage to the window surface can increase the scattering of light and may reduce the visibility to levels below safety limits. Moreover, regulations of motor worthiness (MOT) stipulate that there can be no chips or visual impairments on laminated windscreens, so whereas recent improvements have made the windscreens shatter-proof, they are still prone to chipping and fracturing and thus will require replacement.

The process of replacing vehicle windscreens is both laborious and time consuming. The automotive glass fitter has first to remove the defective windscreen (usually in intact form), however the windscreen is firmly bonded in place and the adhesive sealant is hardened. Typically the fitter uses a device comprising a cheesewire. The cheesewire is used to cut/saw through the hardened rubber along the periphery of the windscreen. This process requires physical force and can lead to musculo-skeletal conditions in the fitters themselves as a result of repetitive strain injury. Further problems associated with this method are that the cheesewires can overheat due to friction, additionally the wires themselves can break.

Other methods of detaching the windscreen from the adhesive sealant include: the use of mechanical oscillator knives/cutters to cut through the hardened material or; directed heat such as a laser beam to soften the sealant prior to removing the windscreen with either cheesewire or specialised bladed tools . The problem with a method where heat is directly applied to the sealant is that the heat required to soften the hardened adhesive sealant can concomitantly and inadvertently damage the vehicle's paintwork and/or other exterior surfaces. For example, a pulsed laser that is set to pulse too fast will not generate enough energy to char the adhesive sealant and a pulsed laser that is set too slow will burn the adhesive sealant and liquify it.

Once the windscreen has been freed from the rubber sealant it can be removed and the surround scraped before it is replaced. It is known from the prior art to use urethane based adhesives to fix/seal the replaced windscreen in place and to apply the adhesive from a dispenser gun to specific peripheral edges so as not to impinge on the viewing capacity of the windscreen. The adhesive typically takes about 8 hours to cure.

Recent advances to the industry have provided for the inclusion of fast cure agents/catalysts so as to speed up the time from vehicle drop-off to vehicle collection. The fast cure agents/catalysts can be provided pre-mixed in the adhesive composition or alternatively can be mixed with the adhesive at the point of exit from a dispensing gun. However the problem still remains that the removal of a defective windscreen and its subsequent replacement is a laborious and time consuming process which can result in damage to the dashboard interior or vehicle paint-work.

An adhesive that could satisfy vehicle safety crush and crash standards and provide for easy, effective and damage-proof removal of a defective windscreen or other fixed glazing from a vehicle would offer immediate improvement to the industry and consumer.

In a completely different technical field it is known to provide thermoexpandable microcapsules or microspheres for use in the manufacture of porous or lightweight materials with density (weight) reduction, acoustic and thermal insulating properties as covering materials or walls. The microcapsules or microcapsules comprises a polymer shell or shell of some other similar material, the shell being of certain thickness and chemical/physical/mechanical properties. The shell encapsulates materials such as volatile organic solvents, expandable gases or activating agents, including explosives or any other such material which is capable of exploding the shell and expanding at certain specified conditions with a selected matrix . The microcapsules, when heated to a sufficient temperature, typically in the region of 75-180°C, depending on the encapsulated substance and the shell composition and thickness, can produce an increase of their volume at high expansion rate in some instances at a volumetric expansion limit of up to 70 to 160 times the original volume. The percentage and distribution of the microspheres in a given composition, their expansion ratio, the temperature operating range, the softening transition range of the shell material and the matrix cohesion and consistency are all parameters which are able to influence the expansion volume of a layer between two materials.

We have discovered that by mixing an appropriate adhesive in a suitably rheological performance with a certain % in powdered form of specially developed microcapsules having a specific range of size distribution, the resulting composition is effective at providing glazing adhesion and sealing. Moreover, of particular advantage is that the adhesive bonds in the composition can be weakened by the application of direct heat to the composition thereby allowing sufficient softening of the adhesive material so that a vehicle windscreen/fixed glazing can be easily lifted up and so rapidly removed. The lifting pressure can be predicted by a computational software which is part of this invention and treats the expanding microspheres like a spring mechanical pressure actuator in the volume of the adhesive state and like a "bombing" actuator at interfaces between two layers.

We believe that the invention provides the first application/use of a polyester material in the automotive glazing industry.

It will be appreciated that the adhesive of the invention has application in other areas especially where two surfaces are to be bonded together and where one surface may subsequently need replacing following damage or ware, for example, shower doors and vehicle panels and other building glazing applications.

Reference herein to vehicle is intended to include car, lorry, van ship, boat, plane, cable car, helicopter, hovercraft and any other form of transport in which there is fixed glazing.

### Statement of the Invention

In its broadest aspect the invention provides a method for detaching surfaces using a composition comprising a heat triggered adhesion-deactivating microcapsule or microsphere or microbead, typically the microcapsule or microsphere or microbead is typically dispersed in another medium such as an adhesive or primer or at an interface between two layers.

According to a first aspect of the invention there is provided a method of removing a vehicle windscreen or fixed glazing or vehicle panel comprising the steps of:
(i) applying a heat source to a cured adhesive comprising thermoexpandable microcapsules wherein the heat applied is sufficient to cause thermoexpansion of the microcapsules and thus weaken the adhesive cohesion and interface bonds of the composition; and
(ii) removing the windscreen or fixed glazing or vehicle panel from the main vehicle body.

Reference herein to microcapsule is intended to include a microsphere or microbead.

Preferably, the microcapsules each comprise a shell which encapsulates at least one expandable gas or volatile expandable agent or an explosive material. Preferably, the shell is composed of a polymer or other suitable material.
Preferably, the adhesive agent is a urethane or polyurethane or polyvinylchloride or a MS polymer.
Preferably, the thermoexpandable capsules are microspheres or hollow fibres in the form of a powder of specific range of dimensions and properties.

The powder can be provided with the adhesive agent in a pre-mixed form in a container or the powder can be introduced into and mixed with the adhesive or one component of it at a point of exit from a dispensing device i.e. the composition can be formed as a pre-mix or at the time of, or shortly before, its use. The dispensing device can be followed by a static mixer suitably lubricated at the point of exit of the composition for optimal blending.

Preferably, the composition additionally comprises a fast cure agent or catalyst, whereby the adhesive composition is rapidly cured or set. Preferably, the composition comprises a colouring agent so that the cured composition is black.

Reference herein to cure is intended to mean the hardening or setting of the adhesive mixture, the hardening or setting can be either chemically or non-chemically enhanced.

Preferably, the microcapsules encapsulate more than one material, ideally the material is selected from the group consisting of an expanding agent, an agent capable of sublimation, water, an explosive material or an activator agent.

Preferably, the activator agents are capable of foaming or of shrinkage. The present invention includes the simultaneous use of microcapsules encapsulating a variety of different agents, either separately or in combination. The additional microcapsules are activated by the breaking or permeation of the polymer shell whereby their contents are released so as to interact with the adhesive mix. Their activation is as a result of specified applied conditions and thus is controllable. Microspheres do not break/fracture their shells in the expanding state maintaining their integrity, so that an activated composition comprises intact expanded microspheres and microcapsules which have released their contents into the matrix composition.

It will be appreciated that the expanding agent inside the capsule is capable of activating a foaming process of the adhesive composition and that the agent capable of sublimation is to allow the composition to expand under certain specified conditions. Both these processes will occur after the breakage/fracture of the microcapsule shell and thus contribute to facilitating lifting and ease of removing fixed glazing. The inclusion of water in the microcapsules is to allow the adhesive composition to weaken in certain conditions and the presence of an activator agent is to crosslink or polymerise the adhesive composition whereby shrinkage occurs and the adhesive composition weakens.

Preferably, the microsphere's diameter is in the range 10 to 120 µm.

Preferably, the microcapsule shell thickness is in the range 3 to 7 µm.

Preferably, the composition comprises microcapsules in the range of 1-30% by volume, and more preferably in the range of 2-10% by volume.

Preferably, the composition is activated by heat wherein the heat activation range is 80-170° C and ideally 120-150° C.

Preferably, the composition is composed of a mixture of microcapsules of different diameter or shell thickness or of differing heat activation temperatures or different suitable expanding coefficients.

The temperature of a vehicle windscreen can reach over 100°C in natural soak conditions. Thus the heat activation of the microcapsules in the composition of the invention needs to be in excess of any natural temperatures that may occur whilst being below those that could damage a vehicle dashboard trim or paint-work. It is envisaged that the composition of the invention will have application in many fields and many diverse climates hence the composition may be provided with selected heat activation ranges depending on its intended use and/or country of use for both kinds of microcapsule: the expanding microspheres and the microcapsules with breakable shells. For example, in the instance of the composition being used for fixing and sealing a shower door it is envisaged that the adhesive composition microcapsule heat activation range would be in the region of 80-100 °C, whilst for the majority of automotive glazing the microcapsule heat activation range would be in the region of 120-150° C. Optionally in either composition a user may require microcapsules capable of releasing a curing agent and/or an activator agent capable of shrinkage.

Heat activation of the microcapsules causes the beads/fibres to thermoexpand thus creating pressure along the rim of glazing. This in effect reduces the viscosity and the shear or tear stress of the adhesive material. In addition, heat activation or expansion of the microcapsules reduces the cohesive stress and/or interfacial adhesive bonding of the adhesive film between two bonded surfaces, typically the frame and glass layers. The reduction in either cohesive stress and interfacial adhesion, or both together, contribute to reduce failure stress so as to facilitate removal of the glued glazing from the frame once the microcapsules have expanded at the specific temperature range and range of time, typically no more than 5 minutes. The compositions of the present invention thus allows removal of glued glazing by virtue of a reduction in chemical and/or physical bonding of the adhesion at the interface between the adhesive and the two bonded surfaces (glass and frame surfaces). In other words, adhesion failure can only occur at the interface of the two bonded surfaces due to the effect of the expanded microcapsules. In use, and once the microcapsules have been activated the reduction in cohesive forces of the adhesive material and the bonding at interface between material and layers in addition to the expansion of the adhesive material itself, results in the loosening of the whole of the adhesion of the glazing to a frame so that a windscreen or glazing can be easily lifted up and removed therefrom.

According to a further aspect of the invention there is provided use of a composition comprising an adhesive agent and dispersed therein thermoexpandable microcapsules for removing vehicle windscreen or fixed glazing or vehicle panels.

Preferably, the composition further includes any one or more of the features herein before described.

According to a yet further aspect of the invention there is provided a composition comprising a primer and dispersed therein thermoexpandable microcapsules.
Preferably, the composition further includes any one or more of the features herein before described.

According to a further aspect of the invention there is provided use of a composition comprising a primer and dispersed therein thermoexpandable microcapsules for removing vehicle windscreen or fixed glazing or vehicle panels.

Preferably, the composition further includes any one or more of the features herein before described.

It will be appreciated that the invention also includes the use of microcapsules when applied directly to a glazing face and/or body of a vehicle.

According to a yet further aspect of the invention there is provided a method of installing and/or replacing a vehicle windscreen or fixed glazing comprising the steps of:
(i) placing a windscreen flush against a window aperture rim of a vehicle,
(ii) applying the composition of the first aspect of the invention around a peripheral region of the windscreen;
(iii) allowing sufficient time for the adhesive to cure;
(iv) applying a heat source to the cured adhesive wherein the heat applied is sufficient to cause thermoexpansion of the microcapsules and thus weaken the adhesive cohesion and interface bonds of the composition; and
(v) removing the windscreen from the main vehicle body.

It will be appreciated that in one aspect, the method of installation involves steps i-iii whilst in another aspect the method of replacement involves steps iv-v.

By using the method of the invention as herein described, a vehicle windscreen or fixed glazing can be removed and/or replaced more rapidly and advantageously with less damage to the frame and/or paint work than by prior art methods, thus the method is more cost effective to both the fitter and customer.

## Claims

1. A method of removing a vehicle windscreen or fixed glazing or vehicle panel comprising the steps of:
(i) applying a heat source to a cured adhesive comprising thermoexpandable microcapsules wherein the heat applied is sufficient to cause thermoexpansion of the microcapsules and thus weaken the adhesive cohesion and interface bonds of the composition;
and
(ii) removing the windscreen or fixed glazing or vehicle panel from the main vehicle body.

2. A method according to claim 1 wherein the microcapsules are activated by heat in a heat activation range of 80-170° C.

3. A method according to either claim 1 or 2 wherein the microcapsules are activated by heat in a heat activation range of 120-150° C.

4. A method according to any preceding claim wherein the adhesive is a urethane or polyurethane or polyvinylchloride or a MS polymer.

5. A method according to any preceding claim wherein the microcapsules each comprising a shell, encapsulate at least one expandable gas or volatile expandable agent or an explosive material so that when heat is applied they expand and release their contents into the adhesive.

6. A method according to any preceding claim wherein the microcapsules encapsulate more than one material selected from the group comprising an expanding agent, an agent capable of sublimation, water, an explosive material or an activator agent.

7. A method according to any preceding claim wherein the microcapsule diameter is in the range 10 to 120 µm.

8. A method according to any preceding claim wherein the microcapsule shell thickness is in the range 3 to 7 µm.

9. A method according to any preceding claim wherein the microcapsules are present in the range of 1-30% by volume.

10. A method according to Claim 9 wherein the microcapsules are present in the range of 2-10% by volume.

11. A method according to any preceding claim wherein the adhesive comprises a mixture of microcapsules of different diameter or shell thickness or of differing heat activation temperatures or different expanding coefficients.

12. Use of a composition comprising an adhesive agent or primer and dispersed therein thermoexpandable microcapsules for removing vehicle windscreens or fixed glazing or vehicle panels.

## Patentansprüche

1. Verfahren zum Entfernen einer Fahrzeug-Windschutzscheibe oder festen Verglasung oder Fahrzeug-Platte mit folgenden Schritten:
(i) Anwenden einer Wärmequelle auf einen abgebundenen Klebstoff, der thermoexpandierbare Mikrokapseln enthält, wobei die aufgebrachte Wärme ausreicht, eine Thermoexpansion der Mikrokapseln zu verursachen und somit die Kohäsion des Klebstoffs und die Grenzflächenbindungen der Struktur zu schwächen; und
(ii) Entfernen der Windschutzscheibe oder festen Verglasung oder Fahrzeug-Platte von der Hauptkarosserie des Fahrzeuges.

2. Verfahren nach Anspruch 1, wobei die Mikrokapseln durch Wärme in einem Wärmeaktivierungsbereich von 80 - 170°C aktiviert werden.

3. Verfahren nach Anspruch 1 oder 2, wobei die Mikrokapseln durch Wärme in einem Wärmeaktivierungsbereich von 120 - 150°C aktiviert werden.

4. Verfahren nach einem beliebigen vorangehenden Anspruch, wobei der Klebstoff ein Urethan oder Polyurethan oder Polyvinylchlorid oder ein MS-Polymer ist.

5. Verfahren nach einem beliebigen vorangehenden Anspruch, wobei die Mikrokapseln jeweils eine Hülle aufweisen, mindestens ein expandierbares Gas oder ein flüchtiges, expandierbares Mittel oder ein explosives Material einkapseln, so dass sie expandieren und ihren Inhalt in den Klebstoff freigeben, wenn Wärme aufgebracht wird.

6. Verfahren nach einem beliebigen vorangehenden Anspruch, wobei die Mikrokapseln mehr als ein Material einkapseln, welches aus der Gruppe ausgewählt ist, die ein expandierendes Mittel, ein sublimierungsfähiges Mittel, Wasser, ein explosives Material oder ein Aktivierungsmittel enthält.

7. Verfahren nach einem beliebigen vorangehenden Anspruch, wobei der Mikrokapseldurchmesser im Bereich von 10 bis 120 µm liegt.

8. Verfahren nach einem beliebigen vorangehenden Anspruch, wobei die Hüllendicke der Mikrokapsel im Bereich von 3 bis 7 µm liegt.

9. Verfahren nach einem beliebigen vorangehenden Anspruch, wobei die Mikrokapseln im Bereich von 1 bis 30 Volumenprozent vorhanden sind.

10. Verfahren nach Anspruch 9, wobei die Mikrokapseln im Bereich von 2 bis 10 Volumenprozent vorhanden sind.

11. Verfahren nach einem beliebigen vorangehenden Anspruch, wobei der Klebstoff eine Mischung von Mikrokapseln unterschiedlicher Durchmesser oder Hüllendicke oder unterschiedlicher Wärmeaktivierungstemperaturen oder unterschiedlicher Ausdehnungskoeffizienten enthält.

12. Verwendung einer Zusammensetzung mit einem Klebstoff oder einer Grundierung und darin dispergierten thermoexpandierbaren Mikrokapseln zum Entfernen von Fahrzeug-Windschutzscheiben oder fester Verglasung oder Fahrzeug-Platten.

## Revendications

1. Procédé pour l'enlèvement d'un pare brise de véhicule ou d'un vitrage à dormant, ou d'un panneau de véhicule, comprenant les étapes de :
(i) appliquer une source de chaleur à un adhésif vulcanisé comprenant des micro capsules thermo expansibles, tandis que la chaleur appliquée est suffisante pour provoquer l'expansion thermique des micro capsules et ainsi affaiblir la cohésion de l'adhésif et les liaisons d'interface de la composition ; et
(ii) enlever le pare brise ou le vitrage ou le panneau de véhicule de la carcasse ou de la structure principale du véhicule.

2. Procédé selon la revendication 1, **caractérisé en ce que** les micro capsules sont activées par chaleur dans une gamme d'activation de chaleur de 80-170°C.

3. Procédé selon l'une revendications 1 ou 2, **caractérisé en ce que** les micro capsules sont activées par chaleur dans une gamme d'activation de chaleur de 120-150°C.

4. Procédé selon l'une des revendications précédentes, **caractérisé en ce que** l'adhésif est uréthane ou polyuréthane ou polyvinylchlorure ou un polymère MS.

5. Procédé selon l'une des revendications précédentes, **caractérisé en ce que** les micro capsules chacune comportent une coquille, qui encapsulent au moins un gaz expansible ou un agent expansible volatile, ou un matériau explosif, de façon que, lorsque la chaleur est appliquée, elles soient en expansion et relâchent leur contenu dans l'adhésif.

6. Procédé selon l'une des revendications précédentes, **caractérisé en ce que** les micro capsules encapsulent plus d'un matériau choisi parmi les groupes comprenant un agent d'expansion, un agent apte à sublimation, de l'eau, un matériau explosif ou un agent d'activation.

7. Procédé selon l'une des revendications précédentes, **caractérisé en ce que** le diamètre de la micro capsule est dans la gamme de 10 à 120 microns.

8. Procédé selon l'une des revendications précédentes, **caractérisé en ce que** l'épaisseur de la coquille de micro capsule est dans la gamme de 3 à 7 microns.

9. Procédé selon l'une des revendications précédentes, **caractérisé en ce que** les micro capsules sont présentes dans la gamme de 1 à 30% en volume.

10. Procédé selon la revendication 9, **caractérisé en ce que** les micro capsules sont présentes dans la gamme de 2 à 10% en volume.

11. Procédé selon l'une des revendications précédentes, **caractérisé en ce que** l'adhésif comporte un mélange de micro capsules de différents diamètres ou d'épaisseurs de coquilles différentes ou de température d'activation de chaleur différentes ou de coefficients d'expansion différents.

12. Utilisation d'une composition comprenant un agent adhésif ou un primaire et dispersées dans celui-ci des micro capsules thermo expansibles, pour l'enlèvement de pares brise de véhicule ou de vitrage à dormant ou de panneaux de véhicule.
